# EUROPÄISCHE PATENTSCHRIFT

(11) **EP 1 257 399 B1**
(45) Veröffentlichungstag und Bekanntmachung des Hinweises auf die Patenterteilung: **10.08.2005**
(21) Anmeldenummer: 01909789.8
(22) Anmeldetag: 23.02.2001
(51) Int. Cl.: B27N 7/00

(54) **DURCHLAUFVERFAHREN ZUM ANBRINGEN EINES BESCHICHTUNGSMATERIALS AN WERKSTÜCKE**
CONTINUOUS METHOD FOR APPLICATION OF A COATING MATERIAL TO WORKPIECES
PROCESSUS CONTINU PERMETTANT D'APPLIQUER UN MATERIAU DE REVETEMENT SUR DES PIECES

(30) Priorität: 24.02.2000 DE 20003326 U
(43) Veröffentlichungstag der Anmeldung: 20.11.2002
(73) Patentinhaber: HOMAG MASCHINENBAU AG, D-72296 Schopfloch (DE)
(72) Erfinder: KALMBACH, Kurt, 72275 Alpirsbach (DE)
(74) Vertreter: HOFFMANN - EITLE
(86) Internationale Anmeldenummer: PCT/EP2001/002088
(87) Internationale Veröffentlichungsnummer: WO 2001/062456

(56) Entgegenhaltungen:
- DE-A- 3 834 263
- DE-A- 19 615 879
- DE-A- 19 809 459
- FR-A- 1 470 941
- US-A- 4 258 651
- US-A- 4 844 764

## Beschreibung

### Technisches Gebiet

Die vorliegende Erfindung betrifft ein Durchlaufverfahren, mit dem poröse Schmalseiten von Werkstücken aus Holz-, Holzaustauschwerkstoffen oder holzähnlichen Werkstoffen, wie beispielsweise Platten, insbesondere Spanplatten, im Durchlauf sowohl an den Schmalseiten als auch auf zumindest einer Hauptseite mit einem Beschichtungsmaterial durchgehend beschichtet werden.

### Stand der Technik

Zur Vergütung der Schmalseiten oder Kanten eines Werkstücks ist deren Beschichtung mit einem Materialstreifen seit langem bekannt. Grundsätzlich unterscheidet man hierbei zwischen stationären Verfahrensweisen, in denen das entsprechend zu bearbeitende Werkstück stationär auf einem Bearbeitungstisch aufgespannt ist und die Kantenbearbeitungseinrichtungen um das Werkstück herum geführt werden, und Durchlaufverfahren, in denen das Werkstück an den einzelnen Bearbeitungsaggregaten vorbeigeführt wird. Durchlaufverfahren sind zwar nicht so flexibel und an unterschiedliche Werkstücke anpassbar wie stationäre Verfahrensweisen, jedoch sind mit Durchlaufverfahren höhere Produktionsraten erzielbar.

Die vorliegende Erfindung betrifft lediglich Durchlaufverfahren.

Bei einem bekannten Durchlaufverfahren (vgl. DE 199 07 939 und DE 196 15 879) wird auf die Schmalseite des sich kontinuierlich bewegenden Werkstücks eine kombinierte Füll- und Verklebungsmasse aufgetragen. Auf die aufgetragene, noch nicht ausgehärtete und damit noch klebefähige Füll- und Verklebungsmasse wird ein separates, streifenförmiges Beschichtungsmaterial aufgebracht. Das Beschichtungsmaterial wird dann in einer an die Profilform angepassten Weise an die Werkstückschmalseite angedrückt und dadurch, dass die Füll- und Verklebungsmasse schnell erhärtet, hiermit sauber und ohne Oberflächenunregelmäßigkeiten zu hinterlassen, verklebt.

Dieser bekannten Verfahrensweise liegt der Gedanke zugrunde, die bisher beim Stand der Technik zeitlich voneinander getrennten Bearbeitungsschritte, d.h. das Vergüten der Oberfläche der Werkstückschmalseite und das Aufkleben des Beschichtungsmaterials, zu einem einzigen Verfahrensschritt zusammenzuführen. Hierfür wird erstmals eine kombinierte Füll- und Verklebungsmasse auf die poröse Werkstückschmalseite aufgebracht. Das Aufbringen der Füll- und Verklebungsmasse erfolgt insbesondere derart, dass die Masse eine gewisse Schichtdicke auf der Schmalseite aufweist, also hierauf zumindest geringfügig "erhaben" ist. Diese Masse wird dann unter Zwischenschaltung des normalerweise unmittelbar nach dem Aufbringen zugeführten separaten Beschichtungsmaterials in die Poren des Werkstücks eingedrückt. Gleichzeitig wird durch das Andrücken des Beschichtungsmaterials dieses mit der darunter befindlichen Masse verbunden, aber auch mit dem Werkstück verklebt. Die Füll- und Verklebungsmasse ist hierzu derart eingestellt, dass die Poren des Holzwerkstoffes des Werkstückes vollständig gefüllt werden. Gleichzeitig erfolgt aber auch durch das Aufbringen des Beschichtungsmaterials eine Vergleichsmäßigung an der Schmalseitenoberfläche. Mit anderen Worten: das Beschichtungsmaterial liegt sozusagen auf dem erhabenen geglätteten Kleber auf, und es werden hierdurch unter Umständen noch vorhandene Unregelmäßigkeiten ausgeglichen.

Dieses bekannte Verfahren hat den Vorteil, dass erstmals im Durchlauf auch äußerst poröse Werkstoffe in im Kantenbereich in kürzester Zeit beschichtet werden können. Insbesondere ist es mit diesem Verfahren auch erstmals möglich, nicht nur an sich bekannte Kantenbeschichtungen aufzubringen, wie beispielsweise PVC-Kanten, sondern auch äußerst dünne Dekorpapiere, wie beispielsweise Melaminharzpapiere etc. mit einem Flächengewicht zwischen 20-80 g/m², insbesondere Papiere mit einem Flächengewicht von 30-50 g/m².

Nach einem derartigen Verfahren hergestellte Werkstücke weisen zwar eine qualitativ hochwertige Kante bzw. Schmalseite auf. Der Übergang von der Kantenbeschichtung auf die Beschichtung der Hauptseite (Plattenober- oder Plattenunterseite) ist jedoch nach wie vor problembehaftet.

Zwar existieren bereits eine Vielzahl von Lösungsvorschlägen für diesen Problembereich. Diese Lösungsvorschläge erfüllen jedoch entweder nicht die in der Praxis geforderten Qualitätskriterien oder erfordern zur Umsetzung relativ komplexe Verfahrensweisen und in deren Folge einen relativ hohen maschinellen und fertigungstechnischen Aufwand.

### Darstellung der Erfindung

Aufgabe der vorliegenden Erfindung ist es daher, einen vollkommen neuartigen Lösungsweg für diesen Problembereich aufzuzeigen.

Diese Aufgabe wird mit einem Durchlaufverfahren gelöst, mit dem Werkstücke aus Holz- oder Holzaustauschwerkstoffen oder holzähnlichen Werkstoffen im Durchlauf auf einer Schmalseite und zumindest einer an die Schmalseite anschließenden Hauptseite mit einem Beschichtungsmaterial beschichtet und mit diesem verklebt werden, indem
a) auf eine Schmalseite des sich kontinuierlich bewegenden Werkstücks eine kombinierte Füll- und Verklebungsmasse und auf die zumindest eine Hauptseite oder auf das Beschichtungsmaterial eine Verklebungsmasse aufgetragen wird,
b) auf die zumindest eine Hauptseite und auf die mit der aufgetragenen und noch klebefähigen Füll- und Verklebungsmasse ausgestattete Schmalseite durchgehend Beschichtungsmaterial als durchgehende Schicht aufgebracht wird, und
c) das Beschichtungsmaterial an die Hauptseite und an die Schmalseite entsprechend der Profilform angedrückt und mittels der Füll- und Verklebungsmasse hiermit verklebt wird.

Durch eine derartige Verfahrensweise wird das Beschichtungsmaterial ohne jeden Stoß von der jeweiligen Hauptseite des Werkstückes auf die Schmalseite durchgehend aufgezogen. Problembereiche, wie sie bei bekannten Verfahrensweisen unumgänglich sind, treten dadurch nicht auf, da keine Stoßfugen vorhanden sind. Besondere maschinelle oder fertigungstechnische Vorkehrungen sind somit nicht erforderlich. Selbst beim Einsatz von äußerst dünnen Dekorpapieren wird bei einer derartigen Verfahrensweise eine außergewöhnlich hohe Beschichtungsqualität erzielt.

Sehr gute Ergebnisse werden erzielt, wenn das Beschichtungsmaterial beim Aufbringen im Kantenbereich derart starkflächig angedrückt wird, dass die darunter befindliche, noch klebefähige Füll- und Verklebungsmasse in den porösen Werkstückwerkstoff eingepresst wird. Dadurch werden nicht nur die Poren des Werkstückwerkstoffes gefüllt, sondern auch die Form der Schmalseite maßgeblich bestimmt und Unebenheiten sowie Einsenkungen oder dergleichen vermieden.

Vorteilhaft ist es deshalb, den Andrückvorgang mittels eines festen, die Profilform der Schmalseite vorgebenden Glättelements durchzuführen. Für Sonderfälle kann es auch zweckmäßig sein, ein elastisches Glättelement vorzusehen, das sich der Profilform der Schmalseite anpasst.

Grundsätzlich kann das Glättelement in der verschiedensten Weise ausgestaltet sein. Besonders vorteilhaft ist es, wenn das Glättelement ein der Profilform der Schmalseite des Werkstückes angepasster Schuh ist.

Aus fertigungstechnischen Gründen ist es zweckmäßig, dass für den Kantenbereich und die Hauptseiten ein und dieselbe Verklebungsmasse verwendet wird. Für Sonderfälle kann es jedoch auch zweckmäßig sein, für den Kantenbereich eine andere Verklebungsmasse als für die Hauptseiten vorzusehen.

### Kurze Beschreibung der Zeichnungen

Im Folgenden sind zur weiteren Erläuterung und zum besseren Verständnis der Erfindung die einzelnen Phasen des erfindungsgemäßen Durchlaufverfahrens unter Bezugnahme auf die Figuren näher beschrieben und erläutert.
- Fig. 1: zeigt schematisch einen Teil einer Spanplatte im Rohzustand,
- Fig. 2: zeigt schematisch die Spanplatte gemäß Fig. 1 nach dem Konturieren im Bereich ihrer Schmalseite,
- Fig. 3: zeigt schematisch das Aufbringen einer Füll- und Verklebungsmasse auf die Schmalseite mittels eines der konturierten Profilform angepassten Schuhs,
- Fig. 4: zeigt schematisch das Aufbringen eines Beschichtungsmaterials auf die Hauptseite, und
- Fig. 5: zeigt das Andrücken des bereits auf die Hauptseite aufgebrachten Beschichtungsmaterials an die Schmalseite des Werkstücks.

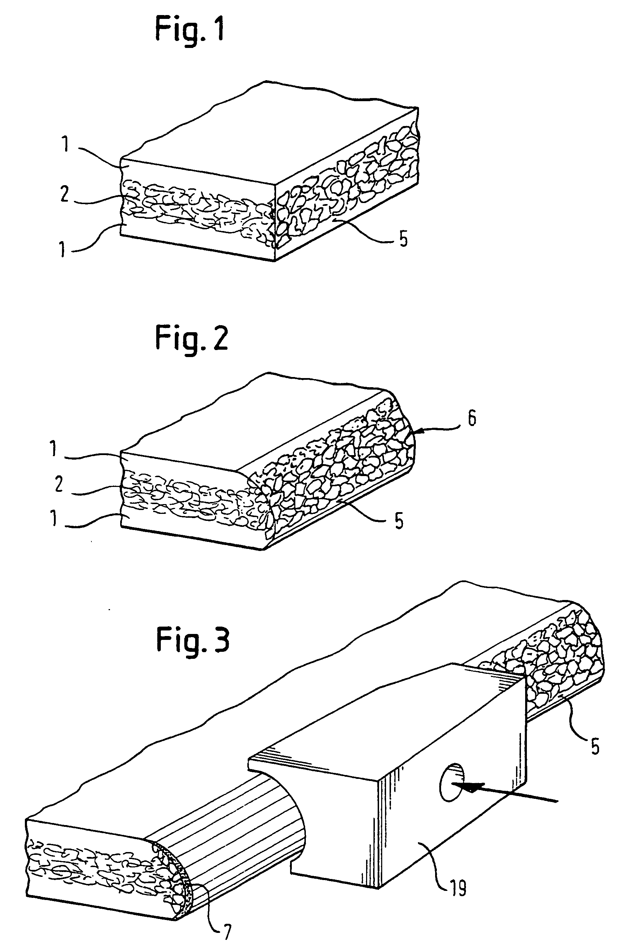

Wie insbesondere aus den Fig. 1 und 2 hervorgeht, besitzt die Spanplatte eine wenig verdichtete, grobfaserige Mittellage 2 und zwei glatte, hoch verdichtete Außenschichten 1.

Wie aus Fig. 2 hervorgeht, ergibt sich an der Schmalseite 5 aufgrund der porösen Struktur der Mittellage 2 nach dem Konturieren eine sehr unregelmäßige, poröse und mit Ausbrechungen versehene Oberfläche 6.

Gemäß Fig. 3 wird erfindungsgemäß in einem ersten Schritt auf die konturierte Schmalseite 5 eine kombinierte Füll- und Verklebungsmasse 7 aufgebracht. Im vorliegenden Ausführungsbeispiel wird die Füll- und Verklebungsmasse 7 mittels eines Schuhs 19 aufgetragen. Dabei wird die Verklebungsmasse 7 in den Schuh eingespeist, wie dies in Fig. 3 mit einem Pfeil schematisch dargestellt ist. Durch ein Kanalsystem innerhalb des Schuhs wird dann die Verklebungsmasse 7 auf die Schmalseite 5 aufgetragen.

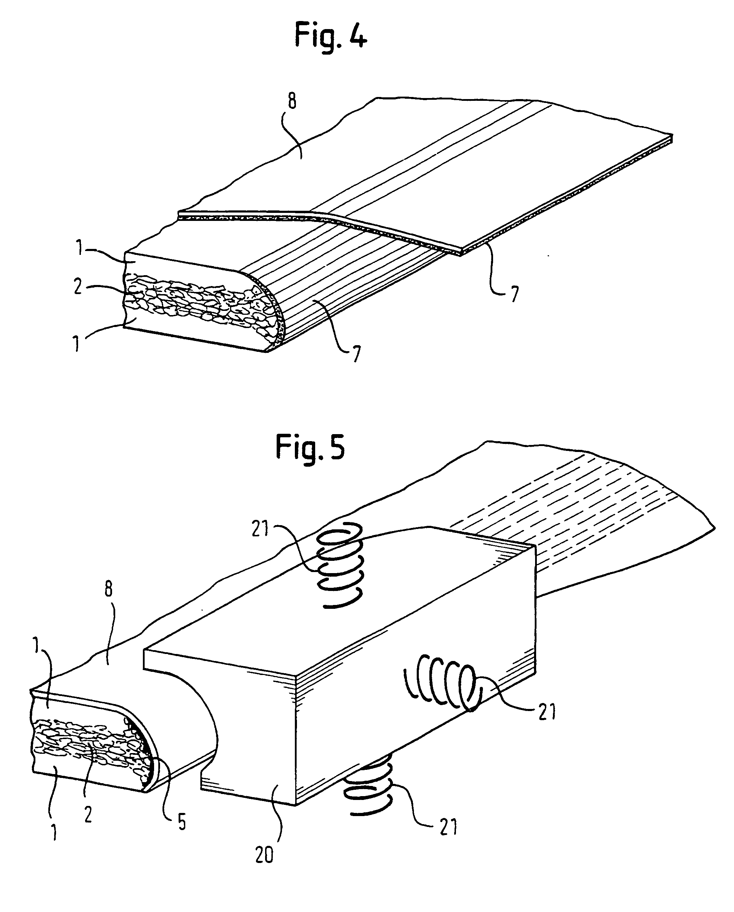

Wie aus Fig. 4 hervorgeht, wird im Folgeschritt Beschichtungsmaterial 8 auf die Hauptseite aufgetragen. Im vorliegenden Ausführungsbeispiel ist das Beschichtungsmaterial 8 bereits auf seiner Unterseite mit einer Verklebungsmasse 7 beschichtet.

Wie Fig. 5 zeigt, wird in einem daran anschließenden weiteren Schritt dann das Beschichtungsmaterial 8 mittels eines Schuhs 20 an die Schmalseite 5 angepresst und mit dieser verklebt. Mittels des Schuhs 20 wird dabei die endgültige Kantenform im Bereich der Schmalseite geformt und etwa überschüssiges Klebermaterial bei der Formgebung herausgedrückt. Dieses Klebermaterial kann später abgewischt oder abgeschnitten werden. In jedem Fall erhält man eine optimal glatte, der gewünschten Form genau entsprechende Schmalseite.

Der Schuh 20 kann in verschiedenster Weise gelagert sein. Eine vorteilhafte nachgiebige Lagerung ist in Fig. 5 mit Federn 21 angedeutet.

## Patentansprüche

1. Durchlaufverfahren, mit dem Werkstücke (1, 2) aus Holz- oder Holzaustauschwerkstoffen oder holzähnlichen Werkstoffen im Durchlauf auf einer Schmalseite und zumindest einer an die Schmalseite anschließenden Hauptseite mit einem Beschichtungsmaterial (8) beschichtet und mit diesem verklebt werden, indem
a) auf eine Schmalseite (5) des sich kontinuierlich bewegenden Werkstücks (1, 2) eine kombinierte Füll- und Verklebungsmasse (7) und auf die zumindest eine Hauptseite oder auf das Beschichtungsmaterial eine Verklebungsmasse aufgetragen wird,
b) auf die zumindest eine Hauptseite und auf die mit der aufgetragenen und noch klebefähigen Füll- und Verklebungsmasse (7) ausgestattete Schmalseite durchgehend Beschichtungsmaterial (8) als durchgehende Schicht aufgebracht wird, und
c) das Beschichtungsmaterial (8) an die Hauptseite und an die Schmalseite (5) entsprechend der Profilform angedrückt und mittels der Füll- und Verklebungsmasse (7) hiermit verklebt wird.

2. Durchlaufverfahren nach Anspruch 1, **dadurch gekennzeichnet, dass** das Beschichtungsmaterial (8) im Schritt c) derart stark flächig angedrückt wird, dass die darunter befindliche, noch klebefähige Füll- und Verklebungsmasse (7) zum einen in den porösen Werkstückwerkstoff eingepresst wird, zum anderen aber auch das Beschichtungsmaterial (8) an die derart geglättete Schmalseite (5) angeformt und hiermit verklebt wird.

3. Durchlaufverfahren nach Anspruch 1, **dadurch gekennzeichnet, dass** der Schritt c) mittels eines festen, die Profilform der Schmalseite (5) vorgebenden Glättelements (20) durchgeführt wird.

4. Durchlaufverfahren nach Anspruch 1, **dadurch gekennzeichnet, dass** der Schritt c) mittels eines elastischen, sich der Profilform der Schmalseite (5) anpassenden Glättelements (20) durchgeführt wird.

5. Durchlaufverfahren nach Anspruch 3 oder 4, **dadurch gekennzeichnet, dass** das Glättelement (20) ein der Profilform der Schmalseite (5) angepasster Schuh ist.

## Claims

1. Continuous method by means of which workpieces (1, 2) composed of wood or wood-substitute materials or wood-like materials are coated in continuous operation on a narrow side and at least one main side adjoining the narrow side with a coating material (8) and are bonded to the latter in that
a) on a narrow side (5) of the continuously moving workpiece (1, 2) a combined filling and bonding compound (7) and on the at least single main side or on the coating material a bonding compound is applied,
b) on the at least single main side and on the narrow side furnished with the applied and still adhesive filling and bonding compound (7) coating material (8) is continuously applied as a continuous coating, and
c) the coating material (8) is pressed onto the main side and onto the narrow side (5) in accordance with the profile shape and by means of the filling and bonding compound (7) bonded to the latter.

2. Continuous method according to claim 1, **characterised in that** in step c) the coating material (8) is pressed on in such a strongly flattened manner that the still adhesive filling and bonding compound (7) located thereunder is, on the one hand, pressed into the porous workpiece material but, on the other hand, the coating material (8) is moulded onto the narrow side (5) smoothed in this way and bonded thereto.

3. Continuous method according to claim 1, **characterised in that** step c) is carried out by means of a rigid smoothing element (20) which predetermines the profile shape of the narrow side (5).

4. Continuous method according to claim 1, **characterised in that** step c) is carried out by means of an elastic smoothing element (20) which adapts itself to the profile shape of the narrow side (5).

5. Continuous method according to claim 3 or 4, **characterised in that** the smoothing element (20) is a shoe adapted to the profile shape of the narrow side (5).

## Revendications

1. Procédé en continu, à l'aide duquel des pièces d'oeuvre (1, 2), en matériau ligneux ou de substitution du bois, ou en des matériaux analogues à du bois, sont enduites en continu sur un côté étroit, et sur au moins un côté principal se raccordant au côté étroit, par un matériau de revêtement (8), et collées ensemble avec celui-ci, alors que
a) sur un côté étroit (5), de la pièce d'oeuvre (1, 2) se déplaçant de façon continue, est appliquée une masse de remplissage et de collage (7) combinée et, sur le au moins un côté principal ou sur le matériau de revêtement, est appliquée une masse de collage,
b) sur le au moins un côté principal et sur le côté étroit, ayant reçu l'application et muni d'une masse de remplissage et de collage (5) encore adhésive, est appliqué en continu un matériau de revêtement (8) se présentant sous la forme de couche continue, et
c) le matériau de revêtement (8) est pressé sur le côté principal et sur le côté étroit (5), de manière correspondant à la forme du profil et, ainsi, collé au moyen de la masse de remplissage et de collage (7).

2. Procédé en continu selon la revendication 1, **caractérisé en ce que** le matériau de revêtement (8), à l'étape c) est pressé fortement en surface, de manière que la masse de remplissage et de collage (7), encore adhésive, se trouvant au-dessous, soit, d'une part, enfoncée dans le matériau poreux de la pièce d'oeuvre, mais, d'autre part, que le matériau de revêtement (8) soit également façonné en étant lié au côté étroit (5), lissé de cette manière, et ainsi collé à ceci.

3. Procédé en continu selon la revendication 1, **caractérisé en ce que** l'étape c) est accomplie au moyen d'un élément de lissage (20) fixe, prédéterminant la forme de profil du côté étroit (5).

4. Procédé en continu selon la revendication 1, **caractérisé en ce que** l'étape c) est accomplie au moyen d'un élément de lissage (20) élastique, s'adaptant à la forme de profil du côté étroit (5).

5. Procédé en continu selon la revendication 3 ou 4, **caractérisé en ce que** l'élément de lissage (20) est un patin adapté à la forme de profil du côté étroit (5).
